# EUROPEAN PATENT APPLICATION

(11) **EP 4 834 991 A1**
(43) Date of publication of application: **04.11.2026**
(21) Application number: 24912741.6
(22) Date of filing: 23.12.2024
(51) Int. Cl.: C08L 27/12, C08F 214/18, C08K 5/17

(54) **METHOD FOR PRODUCING COMPOSITION, AND CROSSLINKED RUBBER ARTICLE**

(30) Priority: 27.12.2023 JP 2023220825
(71) Applicant: AGC Inc., Chiyoda-ku Tokyo 100-8405 (JP)
(72) Inventor: TAMURA, Tasuku, Tokyo 100-8405 (JP); KAWAI, Tsuyoshi, Tokyo 100-8405 (JP)
(74) Representative: Müller-Boré & Partner Patentanwälte PartG mbB
(86) International application number: PCT/JP2024/045502
(87) International publication number: WO 2025/142854

(57) **Abstract**

Provided are a method for producing a composition for formation of crosslinked rubber articles capable of suppressing cracking under high-temperature and high-compression conditions and showing excellent plasma resistance and a crosslinked rubber article with excellent plasma resistance. The method for producing a composition includes a kneading step of kneading a mixture of a fluorine-containing copolymer (A) and a fluorine-containing copolymer (B) at a temperature higher than or equal to a glass transition temperature of the fluorine-containing copolymer (B), the fluorine-containing copolymer (A) including units based on tetrafluoroethylene and units based on perfluoro(alkyl vinyl ether), and the fluorine-containing copolymer (B) being different from the fluorine-containing copolymer (A) and including units based on a monomer having at least one functional group selected from the group consisting of a carboxy group and a group represented by the formula (X), units based on tetrafluoroethylene and units based on perfluoro(alkyl vinyl ether).

## Description

### TECHNICAL FIELD

The present invention relates to a method for producing a composition and a crosslinked rubber article.

### BACKGROUND ART

Crosslinked rubber articles obtained by crosslinking fluorine-containing copolymers are excellent in heat resistance, chemical resistance, oil resistance, weather resistance and the like, and thus are widely used as sealing materials (for example, O-rings, packings, oil seals and gaskets) and cushioning materials in the fields of vehicles, ships, aircraft, general machinery, architecture and the like.

As a method of producing a composition for forming such crosslinked rubber articles, Patent Document 1 discloses a method of producing a composition containing a specific fluorine-containing copolymer.

### PRIOR ART DOCUMENTS

### PATENT DOCUMENTS

Patent Document 1: WO2021/210502

### DISCLOSURE OF INVENTION

### TECHNICAL PROBLEM

Recent years have seen a demand for improved performance of crosslinked rubber articles in various fields. More specifically, there has been a demand for a crosslinked rubber article that can suppress cracking under high-temperature and high-compression conditions and exhibits excellent plasma resistance.

In response to such a demand, the present inventors have assessed crosslinked rubber articles formed from compositions obtained by the composition production method disclosed in Patent Document 1, and have found that these formed crosslinked rubber articles are prone to cracking when subjected to compression set test under high-temperature and high-compression conditions and have room for improvement in plasma resistance.

It is accordingly an object of the present invention to provide a method for producing a composition capable of forming crosslinked rubber articles that can suppress cracking under high-temperature and high-compression conditions and exhibit excellent plasma resistance, and to provide such a crosslinked rubber article.

### SOLUTION TO PROBLEM

As a result of intensive studies, the present inventors have found the following solutions to the above-described problems.
[1] A method for producing a composition, comprising a kneading step of kneading a mixture of a fluorine-containing copolymer (A) and a fluorine-containing copolymer (B) at a temperature higher than or equal to a glass transition temperature of the fluorine-containing copolymer (B),
   the fluorine-containing copolymer (A) comprising units based on tetrafluoroethylene and units based on perfluoro(alkyl vinyl ether), and
   the fluorine-containing copolymer (B), which is a copolymer different from the fluorine-containing copolymer (A), comprising units based on a monomer having at least one functional group selected from the group consisting of a carboxy group and a group represented by the formula (X) described later, units based on tetrafluoroethylene and units based on perfluoro(alkyl vinyl ether).
[2] The method for producing a composition according to [1], wherein the fluorine-containing copolymer (A) comprises units having nitrile groups.
[3] The method for producing a composition according to [1] or [2], wherein, in the kneading step, the mixture is kneaded at a temperature higher than or equal to a melting point of the fluorine-containing copolymer (B).
[4] The method for producing a composition according to any one of [1] to [3], wherein the content of the fluorine-containing copolymer (B) in the mixture is 50 parts by mass or less per 100 parts by mass of the fluorine-containing copolymer (A).
[5] The method for producing a composition according to any one of [1] to [4], wherein the fluorine-containing copolymer (A) is a perfluorinated copolymer.
[6] A crosslinked rubber article obtained by crosslinking, with a crosslinking agent, the fluorine-containing copolymer (A) in the composition produced by the method according to any one of [1] to [5].
[7] The crosslinked rubber article according to [6], which is a sealing material for a semiconductor device.

### ADVANTAGEOUS EFFECTS OF INVENTION

According to the present invention, it is possible to provide a method for producing a composition capable of forming crosslinked rubber articles that can suppress cracking under high-temperature and high-compression conditions and exhibit excellent plasma resistance, and to provide such a crosslinked rubber article.

### DESCRIPTION OF EMBODIMENTS

The terms used in the present invention have the following meanings.

A numerical range expressed using "to" means a range including numerical values before and after "to" as the lower and upper limits.

A "unit" is a generic term for an atomic group derived from one molecule of monomer, which is formed directly by polymerization of the monomer, and an atomic group obtained by chemical conversion of a part of the aforementioned atomic group. A "unit based on a monomer" is hereinafter also simply referred to as a "unit".

A "rubber" refers to a rubber material having the properties as defined in JIS K6200: 2008, and is distinguished from a "resin".

### [Method for Producing Composition]

A method for producing a composition according to the present invention (hereinafter also referred to as the "present production method") includes a kneading step of kneading a mixture of a fluorine-containing copolymer (A) and a fluorine-containing copolymer (B) at a temperature higher than or equal to a glass transition temperature of the fluorine-containing copolymer (B), wherein: the fluorine-containing copolymer (A) includes units based on tetrafluoroethylene and units based on perfluoro(alkyl vinyl ether); and the fluorine-containing copolymer (B) is a copolymer different from the fluorine-containing copolymer (A) and includes units based on a monomer having at least one functional group selected from the group consisting of a carboxy group and a group represented by the below-described formula (X), units based on tetrafluoroethylene and units based on perfluoro(alkyl vinyl ether).

A crosslinked rubber article formed from the composition produced by the present production method can suppress cracking under high-temperature and high-compression conditions and exhibits excellent plasma resistance. The detailed reasons for these effects are not clear, but are presumed as follows.

By kneading the mixture at a temperature higher than or equal to the glass transition temperature of the fluorine-containing copolymer (B), the fluorine-containing copolymer (B) is uniformly dispersed in the fluorine-containing copolymer (A). As a result, the resulting crosslinked rubber article can suppress cracking under high-temperature and high-compression conditions and exhibits excellent plasma resistance.

Hereinafter, the "effects of the present invention" refer to at least one of suppressing cracking under high-temperature and high-compression conditions or exhibiting excellent plasma resistance.

### <Mixture>

The mixture used in the present production method contains the fluorine-containing copolymer (A) and the fluorine-containing copolymer (B).

The mixture preferably contains no crosslinking agent described below.

The mixture may preferably consist only of the fluorine-containing copolymer (A) and the fluorine-containing copolymer (B). More specifically, the total content of the fluorine-containing copolymer (A) and the fluorine-containing copolymer (B) is preferably 90 to 100 mass%, more preferably 95 to 100 mass%, still more preferably 99 to 100 mass%, based on the total mass of the mixture.

### (Fluorine-Containing Copolymer (A))

The fluorine-containing copolymer (A) includes units based on tetrafluoroethylene (hereinafter also referred to as "TFE") and units based on perfluoro(alkyl vinyl ether) (hereinafter also referred to as "PAVE").

The fluorine-containing copolymer (A) itself does not fully return to its original shape when stretched, but upon crosslinking, exhibits the ability to readily return to its original shape, that is, exhibit rubber properties.

The content of the TFE units to all units in the fluorine-containing copolymer (A) is preferably 60.0 to 80.0 mol%, more preferably 63.0 to 75.0 mol%, still more preferably 66.0 to 72.0 mol%.

The PAVE units are units based on perfluoro(alkyl vinyl ether).

From the viewpoint of high polymerization reactivity and good rubber properties, PAVE is preferably a monomer represented by the formula (1).

CF₂=CF-O-R^{f2} (1)

In the formula (1), R^{f2} represents a C₁₋₁₀ perfluoroalkyl group.

The number of carbon atoms in R^{f2} is preferably 1 to 8, more preferably 1 to 6, still more preferably 1 to 5, particularly preferably 1 to 3, from the viewpoint of higher polymerization reactivity.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). Of these, it is preferred to use PMVE or PPVE.

From the viewpoint of higher elasticity of the resulting crosslinked rubber article, the content of the PAVE units to all units in the fluorine-containing copolymer (A) is preferably 20.0 to 40.0 mol%, more preferably 24.0 to 36.0 mol%, still more preferably 27.0 to 33.0 mol%. In the case where PMVE or PPVE is used as PAVE, the preferable content is the same as above.

The fluorine-containing copolymer (A) preferably includes units based on a monomer (hereinafter also referred to as "R_{CN}") having a nitrile group in addition to the units based on the TFE monomer and the units based on the PAVE monomer.

With a view to achieving the superior effects of the present invention, R_{CN} preferably further has a fluorine atom, and is more preferably a monomer represented by the formula (2).

CR¹¹R¹²=CR¹³-R¹⁴-CN (2)

In the formula (2), R¹¹, R¹² and R¹³ each independently represent a hydrogen atom, a fluorine atom or a methyl group; and R¹⁴ represents a divalent C₁₋₁₀ perfluorohydrocarbon group which may have an etheric oxygen atom at a terminal end or between carbon atoms thereof.

From the viewpoint of high polymerization reactivity of R_{CN}, R¹¹, R¹² and R¹³ are each preferably a fluorine atom or a hydrogen atom, and more preferably, all of R¹¹, R¹² and R¹³ are fluorine atoms or hydrogen atoms. All of R¹¹, R¹² and R¹³ are still more preferably fluorine atoms from the viewpoint of higher releasability and heat resistance of the resulting crosslinked rubber article.

R¹⁴ may be linear, branched or cyclic, and is preferably linear or branched. The number of carbon atoms in R¹⁴ is preferably 2 to 8, more preferably 3 to 7, still more preferably 4 to 7, particularly preferably 4 to 6.

R¹⁴ may have an etheric oxygen atom, and preferably has an etheric oxygen atom from the viewpoint of better rubber properties of the resulting crosslinked rubber article.

The number of etheric oxygen atoms in R¹⁴ is preferably 1 to 3, more preferably 1 or 2.

Specific examples of the monomer represented by the formula (2) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN. From the viewpoint of higher releasability and heat resistance of the resulting crosslinked rubber article, it is preferred to use 8CNVE or MV5CN.

With a view to achieving the superior effects of the present invention, the content of the R_{CN} units to all units in the fluorine-containing copolymer (A) is preferably 0.05 to 5 mol%, more preferably 0.1 to 3 mol%, still more preferably 0.2 to 1.5 mol%.

The fluorine-containing copolymer (A) may include units based on a monomer (hereinafter also referred to as an "additional monomer") other than the above monomers.

Specific examples of the additional monomer include vinylidene fluoride (hereinafter also referred to as "VdF"), hexafluoropropylene (hereinafter also referred to as "HFP"), chlorotrifluoroethylene, a monomer (hereinafter also referred to as "BO") having two or more polymerizable unsaturated bonds, a monomer represented by the formula (6), ethylene, propylene and a monomer having a halogen atom (hereinafter also referred to as "other halogen-containing monomer").

As specific examples of the other halogen-containing monomer, bromotrifluoroethylene and iodotrifluoroethylene may be mentioned.

BO units are units based on a monomer having two or more polymerizable unsaturated bonds.

As specific examples of the polymerizable unsaturated bonds, carbon-carbon double bond (C=C) and carbon-carbon triple bond (C≡C) may be mentioned.

From the viewpoint of higher polymerization reactivity, the number of polymerizable unsaturated bonds in BO is preferably 2 to 6, more preferably 2 or 3, still more preferably 2.

BO preferably further has a fluorine atom from the viewpoint of lower compression set of the crosslinked rubber article under high-temperature conditions.

From the viewpoint of lower compression set under high-temperature and high-compression conditions, BO is preferably a monomer represented by the formula (3).

(CR³¹R³²=CR³³)ₐ₃R³⁴ (3)

In the formula (3), R³¹, R³² and R³³ each independently represent a hydrogen atom, a fluorine atom, a methyl group or a trifluoromethyl group; a3 represents an integer of 2 to 6; and R³⁴ represents a (a3)-valent C₁₋₁₀ perfluorohydrocarbon group which may have an etheric oxygen atom at a terminal end or between carbon atoms thereof. The plurality of R³¹, the plurality of R³² and the plurality of R³³ may be the same as or different from one another, and are preferably the same as one another.

a3 is preferably 2 or 3, more preferably 2.

From the viewpoint of higher polymerization reactivity of BO, R³¹, R³² and R³³ are each preferably a fluorine atom or a hydrogen atom, and more preferably, all of R³¹, R³² and R³³ are fluorine atoms or hydrogen atoms. Still more preferably, all of R³¹, R³² and R³³ are fluorine atoms from the viewpoint of heat resistance and chemical resistance of the resulting crosslinked rubber article.

R³⁴ may be linear, branched or cyclic, and is preferably linear or branched, more preferably linear. The number of carbon atoms in R³⁴ is preferably 2 to 10, more preferably 3 to 8, still more preferably 3 to 6, particularly preferably 3 to 5.

R³⁴ may have an etheric oxygen atom, and preferably has an etheric oxygen atom from the viewpoint of better rubber properties of the resulting crosslinked rubber article.

The number of etheric oxygen atoms in R³⁴ is preferably 1 to 6, more preferably 1 to 3, still more preferably 1 or 2. The etheric oxygen atom is preferably located at a terminal of R³⁴.

As preferred examples of the monomer represented by the formula (3), a monomer represented by the formula (4) and a monomer represented by the formula (5) may be mentioned.

(CF₂=CF)₂R⁴¹ (4)

In the formula (4), R⁴¹ represents a divalent C₂₋₁₀ perfluorohydrocarbon group which may have an etheric oxygen atom at a terminal end or between carbon atoms thereof.

Specific examples of the monomer represented by the formula (4) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₆OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂ and CF₂=CFOCF₂CF₂O(CF₂O)₂CF₂CF₂OCF=CF₂. Of these, it is preferred to use CF₂=CFO(CF₂)₃OCF=CF₂ or CF₂=CFO(CF₂)₄OCF=CF₂.

(CH₂=CH)₂R⁵¹ (5)

In the formula (5), R⁵¹ represents a divalent C₂₋₁₀ perfluorohydrocarbon group which may have an etheric oxygen atom at a terminal end or between carbon atoms thereof.

Specific examples of the monomer represented by the formula (5) include CH₂=CH(CF₂)₂CH=CH₂, CH₂=CH(CF₂)₄CH=CH₂ and CH₂=CH(CF₂)₆CH=CH₂. Among these, CH₂=CH(CF₂)₆CH=CH₂ is preferred.

By copolymerizing BO, the terminal polymerizable double bonds of BO react during the polymerization to form the fluorine-containing copolymer (A) with a branched chain.

CF₂=CF-O-R^{f6} (6)

In the formula (6), R^{f6} represents a C₁₋₈ perfluoroalkyl group having one to five etheric oxygen atoms. The number of carbon atoms in R^{f6} is preferably 1 to 6, more preferably 1 to 5.

Specific examples of the monomer represented by the formula (6) include perfluoro(3,6-dioxa-1-heptene), perfluoro(3,6-dioxa-1-octene) and perfluoro(5-methyl-3,6-dioxa-1-nonene).

In the case where the fluorine-containing copolymer (A) includes units based on the additional monomer, the content of the units based on the additional monomer to all units in the fluorine-containing copolymer (A) is preferably 0.01 to 20 mol%, more preferably 0.5 to 10 mol%, still more preferably 1 to 5 mol%, from the viewpoint of good rubber properties of the resulting crosslinked rubber articles.

With a view to achieving the superior effects of the present invention, the fluorine-containing copolymer (A) is preferably a perfluorinated copolymer.

The "perfluorinated copolymer" refers to a fluorine-containing copolymer having a chain of carbon atoms as a main chain, with substantially no hydrogen atoms bonded to carbon atoms and fluorine atoms substituted for hydrogen atoms. The perfluorinated copolymer may have polyvalent atoms other than carbon on its side chain. As such polyvalent atoms, oxygen atoms are preferred.

Here, the expression "substantially no hydrogen atoms" means that the content of hydrogen atoms in the perfluorinated copolymer is 0.5 mass% or less. The content of hydrogen atoms in the perfluorinated copolymer is preferably 0.1 mass% or less, more preferably 0.07 mass% or less, still more preferably 0.05 mass% or less. When the hydrogen content falls within the above range, high heat resistance and chemical resistance can be easily achieved.

The fluorine-containing copolymer (A) may have iodine atoms. In this case, the iodine atoms are preferably present at terminals of polymer chains of the fluorine-containing copolymer (A).

The iodine atoms may be derived from an iodine compound that serves as a chain transfer agent described later, or may be derived from an iodine-containing monomer such as iodotrifluoroethylene among the above-described other halogen-containing monomers. The iodine atoms are preferably derived from an iodine compound that serves as a chain transfer agent.

In the case where the fluorine-containing copolymer (A) has iodine atoms, the content of the iodine atoms is preferably 0.01 to 5.0 mass%, more preferably 0.05 to 2.0 mass%, still more preferably 0.05 to 1.0 mass%, based on the total mass of the fluorine-containing copolymer (A). When the iodine content falls within the above range, the fluorine-containing copolymer (A) shows improved crosslinking reactivity, leading to excellent mechanical properties of the resulting crosslinked rubber article.

The glass transition temperature of the fluorine-containing copolymer (A) is preferably -20 to 20°C, more preferably -10 to 10°C, still more preferably -5 to 5°C.

The glass transition temperature of the fluorine-containing copolymer (A) can be measured with a differential scanning calorimeter (DSC) and, more specifically, measured by the method described in the Examples below.

The glass transition temperature of the fluorine-containing copolymer (A) can be adjusted depending on the types of units constituting the fluorine-containing copolymer (A), the contents of these units, the molecular weight of the fluorine-containing copolymer and the like. For example, the grass transition temperature of the fluorine-containing copolymer (A) tends to become higher as the content of the TFE units increases.

The content of the fluorine-containing copolymer (A) is preferably 60 to 99 mass%, more preferably 70 to 99 mass%, still more preferably 80 to 99 mass%, based on the total mass of the mixture.

An example of a method for producing the fluorine-containing copolymer (A), a method may be mentioned in which the above-described monomers are copolymerized in the presence of a radical polymerization initiator.

The radical polymerization initiator is preferably a water-soluble polymerization initiator or a redox polymerization initiator.

Specific examples of the water-soluble polymerization initiator include: persulfates such as ammonium persulfate, sodium persulfate and potassium persulfate; and organic polymerization initiators such as disuccinic peroxide and azobisisobutylamidine dihydrochloride. Among these, persulfates are preferred, and ammonium persulfate is more preferred.

The redox polymerization initiator may be a polymerization initiator that combines a persulfate with a reducing agent, and is preferably of the type capable of polymerizing each monomer at a polymerization temperature ranging from 0 to 85°C. Specific examples of the persulfate constituting the redox polymerization initiator include ammonium persulfate, alkali metal persulfates such as sodium persulfate and potassium persulfate. Among these, ammonium persulfate is preferred. Specific examples of the reducing agent to be combined with the persulfate include thiosulfates, sulfites, bisulfites, pyrosulfites and hydroxymethanesulfinate salts. Among these, hydroxymethanesulfinates are preferred, and sodium hydroxymethanesulfinate is more preferred.

In the method for producing the fluorine-containing copolymer (A), the above-described monomers may be copolymerized in the presence of a chain transfer agent along with the radical polymerization initiator.

The chain transfer agent is preferably an iodine compound, more preferably an iodine compound represented by the formula RI₂ where R represents an alkylene or perfluoroalkylene group having at least three (preferably 3 to 8) carbon atoms.

Specific examples of the iodine compound represented by the formula RI₂ include 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane.

As the iodine compound, an iodine compound having a perfluoroalkylene group is preferred, and 1,4-diiodoperfluorobutane is more preferred.

When the above-described monomers are copolymerized in the presence of such an iodine compound, iodine atoms can be introduced into the fluorine-containing copolymer (A).

For details of components other than the above-described components used in the production of the fluorine-containing copolymer (A) and for details of the production method of the fluorine-containing copolymer (A), reference may be made to paragraphs [0019] to [0034] of WO2010/082633.

### (Fluorine-Containing Copolymer (B))

The fluorine-containing copolymer (B) is a copolymer different from the fluorine-containing copolymer (A), and includes units based on a monomer having at least one functional group (hereinafter also referred to as a "specific functional group") selected from the group consisting of a carboxy group and a group represented by the formula (X), TFE units and PAVE units.

In other words, the fluorine-containing copolymer (B) includes units having specific functional groups, TFE units and PAVE units.

The specific functional group is either one or both of a carboxy group and a group represented by the formula (X).

*-CO-O-CO-* (X)

In the formula (X), * represents a bonding position.

The units having specific functional groups are preferably units based on a monomer (hereinafter also referred to as "Rx") having such a specific functional group.

Rx may have a plurality of specific functional groups. In the case where Rx has a plurality of specific functional groups, the plurality of specific functional groups may be the same as or different from one another.

Rx, which is used as a monomer, has a polymerizable unsaturated bond. Specific examples of the polymerizable unsaturated bond are as described above.

Rx is preferably a compound having one specific functional group and one polymerizable unsaturated bond.

Examples of the monomer having a carboxy group include anhydrides of unsaturated dicarboxylic acids, such as itaconic anhydride (hereinafter also referred to as "IAH"), citraconic anhydride (hereinafter also referred to as "CAH"), 5-norbornene-2,3-dicarboxylic anhydride (also known as Nadic anhydride; hereinafter also referred to as "NAH") and maleic anhydride.

As a group represented by the formula (X), a group formed by removing one hydrogen atom from an acid anhydride may preferably be mentioned.

Examples of the monomer having a group represented by the formula (X) include anhydrides of unsaturated dicarboxylic acids, such as itaconic anhydride (hereinafter also referred to as "IAH"), citraconic anhydride (hereinafter also referred to as "CAH"), 5-norbornene-2,3-dicarboxylic anhydride (also known as Nadic anhydride; hereinafter also referred to as "NAH") and maleic anhydride.

In view of the reactivity with nitrile groups that the fluorine-containing copolymer (A) may have, Rx preferably includes a monomer having a group represented by the formula (X). For ease of production of the fluorine-containing copolymer (B), Rx more preferably includes at least one type selected from the group consisting of IAH, CAH and NAH, still more preferably includes NAH, and particularly preferably is NAH.

One type of Rx may be used alone, or two or more types of Rx may be used in combination.

Examples of the TFE units and PAVE units in the fluorine-containing copolymer (B) are the same as those of the TFE units and PAVE units in the fluorine-containing copolymer (A).

The fluorine-containing copolymer (B) may include units based on a monomer (hereinafter also referred to as an "additional monomer") other than the above monomers. Specific examples and preferred embodiments of the additional monomer are the same as those of the additional monomer in the fluorine-containing copolymer (A).

The fluorine-containing copolymer (B) may have specific functional groups as main chain terminals.

The specific functional groups as the main chain terminals can be introduced by a radical polymerization initiator, a chain transfer agent or the like used in the production of the fluorine-containing copolymer (B).

With a view to achieving the superior effects of the present invention, the content of the units having specific functional groups to all units in the fluorine-containing copolymer (B) is preferably 0.01 to 3 mol%, more preferably 0.03 to 2 mol%, still more preferably 0.05 to 1 mol%.

The contents of the TFE units to all units in the fluorine-containing copolymer (B) is preferably 90 to 99.89 mol%, more preferably 95 to 99.47 mol%, still more preferably 96 to 98.95 mol%, with a view to achieving the superior effects of the present invention.

The content of the PAVE units to all units in the fluorine-containing copolymer (B) is preferably 0.1 to 9.99 mol%, more preferably 0.5 to 4.97 mol%, still more preferably 1 to 3.95 mol%, with a view to achieving the superior effects of the present invention.

The glass transition temperature of the fluorine-containing copolymer (B) is preferably 40°C or higher, more preferably 50°C or higher, still more preferably 60°C or higher, particularly preferably 70°C or higher. The upper limit of the glass transition point is preferably 150°C or lower, more preferably 120°C or lower, still more preferably 100°C or lower, particularly preferably 90°C or lower.

The glass transition temperature of the fluorine-containing copolymer (B) can be measured with a differential scanning calorimeter (DSC) and, more specifically, measured by the method described the Examples below.

The melting point of the fluorine-containing polymer (B) is preferably 250°C or higher, more preferably 270°C or higher, still more preferably 290°C or higher, particularly preferably 295°C or higher. The upper limit of the melting point is preferably 330°C or lower, more preferably 325°C or lower, still more preferably 315°C or lower, yet more preferably 312°C or lower, particularly preferably 310°C or lower.

When the melting point of the fluorine-containing copolymer (B) is higher than or equal to the lower limit of the above range, the crosslinked rubber article formed from the composition containing the fluorine-containing copolymer (B) achieves high heat resistance. When the melting point of the fluorine-containing copolymer (B) is lower than or equal to the upper limit of the above range, the fluorine-containing copolymer shows good processability, and the crosslinked rubber article formed from the composition containing the fluorine-containing copolymer (B) achieves excellent surface smoothness.

The melting point of the fluorine-containing copolymer (B) can be measured with a differential scanning calorimeter (DSC) and, more specifically, measured by the method described the Examples below.

The glass transition temperature and melting point of the fluorine-containing copolymer (B) can be adjusted depending on the types of units constituting the fluorine-containing copolymer (B), the contents of these units, the molecular weight of the fluorine-containing copolymer and the like. For example, the melting point of the fluorine-containing copolymer (B) tends to become higher as the content of the TFE units increases.

The melt flow rate (hereinafter also referred to as "MFR") of the fluorine-containing copolymer (B) is preferably 1 to 1000 g/10 min, more preferably 10 to 35 g/10 min. Here, the MFR refers to a value measured at a temperature (typically, 372°C) at least 20°C higher the melting point of the fluorine-containing copolymer (B).

When the MFR is higher than or equal to the lower limit of the above range, the fluorine-containing copolymer (B) shows good processability, and the crosslinked rubber article formed from the composition containing the fluorine-containing copolymer (B) achieves excellent surface smoothness.

When the MFR is lower than or equal to the upper limit of the above range, the fluorine-containing copolymer (B) shows excellent mechanical strength, and the crosslinked rubber article formed from the composition containing the fluorine-containing copolymer (B) achieves excellent mechanical strength.

The MFR is an index of the molecular weight of the fluorine-containing copolymer (B). A higher MFR indicates a lower molecular weight, and a lower MFR indicates a higher molecular weight. The MFR can be adjusted depending on the molecular weight (B) of the fluorine-containing copolymer (B) and the conditions for production of the fluorine-containing copolymer (B). For example, the MFR tends to increase as the time for polymerization of the monomers becomes shorter.

With a view to achieving the superior effects of the present invention, the content of the fluorine-containing copolymer (B) is preferably 50 parts by mass or less, more preferably 30 parts by mass or less, still more preferably 20 parts by mass or less, per 100 parts by mass of the fluorine-containing copolymer (A).

The content of the fluorine-containing copolymer (B) is preferably 2 parts by mass or more, more preferably 5 parts by mass or more, still more preferably 7 parts by mass or more, per 100 parts by mass of the fluorine-containing copolymer (A).

Furthermore, the content of the fluorine-containing copolymer (B) is preferably 1 to 40 mass%, more preferably 1 to 30 mass%, still more preferably 1 to 20 mass%, based on the total mass of the mixture.

An example of a method for producing the fluorine-containing copolymer (B), a method may be mentioned in which the above-described monomers are copolymerized in the presence of a radical polymerization initiator. The details of this production method are as described in WO2016/017801.

The fluorine-containing copolymer (B) is preferably in particulate form. In other words, the fluorine-containing copolymer (B) is preferably in the form of copolymer particles containing the fluorine-containing copolymer (B).

The copolymer particles may contain a polymer (hereinafter also referred to as the "other polymer") other than the fluorine-containing copolymer (A) and the fluorine-containing copolymer (B).

Examples of the other polymer include fluorine-containing polymers other than the fluorine-containing copolymers (A) and (B) (for example, tetrafluoroethylene-fluoroalkyl vinyl ether copolymers, tetrafluoroethylene-hexafluoropropylene copolymers, ethylene-tetrafluoroethylene copolymers and the like), polytetrafluoroethylene, aromatic polyesters, polyamide-imides and thermoplastic polyimides.

The content of the fluorine-containing copolymer (B) in the copolymer particles is preferably 80 to 100 mass%, more preferably 85 to 100 mass%, still more preferably 90 to 100 mass%, particularly preferably 99.99 to 100 mass%, based on the total mass of the polymer particles.

With a view to achieving the superior effects of the present invention, the particle size D50 of the copolymer particles is preferably 0.02 to 50 µm, more preferably 0.02 to 35 µm, still more preferably 0.02 to 10 µm.

The particle size D50 of the copolymer particles refers to a volume-based cumulative 50% size (D50) determined by the laser diffraction and scattering method. That is, a particle size distribution is measured by the laser diffraction and scattering method to obtain a cumulative curve with the total volume of a collection of particles set as 100%, and the particle size at which the cumulative volume reaches 50% on the cumulative curve is defined as D50.

The copolymer particles can be obtained by, for example, the method for producing resin particles or a resin powder as disclosed in WO2016/017801.

### <Method>

### (Kneading Step)

The present production method includes a kneading step of kneading the above-described mixture at a temperature higher than or equal to the glass transition temperature of the fluorine-containing copolymer (B).

The kneading step facilitates uniform mixing of the fluorine-containing copolymer (A) and the fluorine-containing copolymer (B), thereby achieving the effects of the present invention.

As the method for kneading, a known kneading method can be employed, and kneading using a kneading machine is preferred.

Examples of the kneading machine include a roll kneader, a kneader, a Banbury mixer and an extruder. In view of the kneadability, temperature control and production stability, an extruder is particularly preferred.

The extruder may be of the type having a heating device and a cylinder with a vent. As examples of the extruder, a single-screw extruder, a twin-screw extruder, a multi-screw extruder and the like may be mentioned. A single extruder may be used alone, or multiple extruders of the same type or different types may be used in series connection. When a twin-screw extruder is used, it may be a non-intermeshing co-rotating type, an intermeshing co-rotating type, a non-intermeshing counter-rotating type or an intermeshing counter-rotating type.

Specific examples of the extruder include Laboplastmill (manufactured by Toyo Seiki Seisakusho Co., Ltd.) and Plasti-Corder Lab-Station (manufactured by Brabender Technologie).

The kneading temperature is higher than or equal to the glass transition temperature of the fluorine-containing copolymer (B), and is preferably higher than or equal to the melting point of the fluorine-containing copolymer (B). The glass transition temperature and melting point of the fluorine-containing copolymer (B) are as described above. The kneading temperature is also preferably higher than or equal to the glass transition temperature of the fluorine-containing copolymer (A), more preferably higher than or equal to the melting point of the fluorine-containing copolymer (A).

More specifically, the kneading temperature is preferably 80°C or higher, more preferably 200°C or higher, still more preferably 240°C or higher, particularly preferably 270°C or higher. The upper limit of the kneading temperature is preferably 350°C or lower, more preferably 340°C or lower, still more preferably 330°C or lower, particularly preferably 320°C or lower.

The kneading time is preferably 0.1 to 60 minutes, more preferably 1 to 30 minutes, still more preferably 1.5 to 15 minutes.

The rotational speed of the rotary member (for example, blade or rotary shaft) is preferably 1 to 500 rpm, more preferably 10 to 250 rpm, still more preferably 50 to 150 rpm.

The method for feeding the fluorine-containing copolymer (A) and the fluorine-containing copolymer (B) into the kneading machine is not particularly limited. For example, the feeding may be performed by kneading the fluorine-containing copolymer (A) and the fluorine-containing copolymer (B) in advance and feeding the resulting mixture into the kneading machine, or may be performed by separately feeding the fluorine-containing copolymer (A) and the fluorine-containing copolymer (B) into the kneading machine. With a view to achieving the superior effects of the present invention, it is preferable to feed the mixture into the kneading machine. The pre-kneading step described later is more preferable.

The kneading step may be preformed one time or two or more times.

### (Pre-kneading Step)

The present production method may preferably include a pre-kneading step.

The pre-kneading step is performed in advance of the above-described kneading step.

By the pre-kneading step, the effects of the present invention can be readily achieved.

The pre-kneading step is a step of kneading the fluorine-containing copolymer (A) and the fluorine-containing copolymer (B) at a temperature lower than the glass transition temperature of the fluorine-containing copolymer (B), thereby obtaining a mixture (hereinafter also referred to as a "pre-mixed material").

Examples of the kneading method are the same as those described for the above-described kneading step. Kneading using a kneading machine is preferred, and kneading using a roll kneader is more preferred.

The kneading temperature is lower than the glass transition temperature of the fluorine-containing copolymer (B). The glass transition temperature of the fluorine-containing copolymer (B) is as described above. The kneading temperature is also preferably lower than the glass transition temperature of the fluorine-containing copolymer (A).

More specifically, the kneading temperature is preferably 20 to 60°C, more preferably 22 to 55°C.

The kneading time is preferably 1 to 30 minutes, more preferably 5 to 15 minutes.

The rotational speed of the rotary member (e.g., blade or rotary shaft) is preferably 100 to 2000 rpm, more preferably 500 to 1500 rpm.

The pre-kneading step may be performed one time or two or more times.

The pre-mixed material may contain a component other than the above-described components, within the range that does not impair the effects of the present invention.

As the other component, there may be mentioned an additive that does not cause vulcanization reaction of the fluorine-containing copolymer (A) and the fluorine-containing copolymer (B) by temperature alone. Examples of such an additive include: imide-based additives having an imide structure, such as polyimides, polyamide-imides and polyether-imides; organic additives for engineering plastics e.g. polyarylates, polysulfones, polyether-sulfones, polyphenylene sulfides, polyether-ether-ketones, polyether-ketones, polyoxybisbenzoates and liquid crystal polymers; phosphorus-based additives such as trioctylphosphine; metal oxide additives such as aluminum oxide, silicon oxide and yttrium oxide; metal carbide additives such as silicon carbide and aluminum carbide; metal nitride additives such as silicon nitride and aluminum nitride; and inorganic additives such as aluminum fluoride, carbon fluoride, and carbon black.

### [Fluorine-containing Copolymer Composition]

A fluorine-containing copolymer composition according to the present invention contains the composition obtained by the above-described present production method and a crosslinking agent.

The composition is not particularly limited so far as it is obtained by the above-described present production method.

### <Crosslinking Agent>

The fluorine-containing copolymer composition contains a crosslinking agent.

As specific examples of the crosslinking agent, an organic peroxide and a compound having two or more amino groups (hereinafter also referred to as a "polyamine compound") may be mentioned. From the viewpoint of excellent crosslinkability of the fluorine-containing copolymer (A) and lower compression set of the resulting crosslinked rubber article under high-temperature and high-compression conditions, a polyamine compound is preferred.

The polyamine compound may be a compound obtained by substituting hydrogen atoms of aliphatic hydrocarbon with amino groups, or may be a compound obtained by substituting hydrogen atoms of aromatic hydrocarbon with amino groups. With a view to achieving the superior effects of the present invention, preferred is a compound obtained by substituting hydrogen atoms of aromatic hydrocarbon with amino groups.

The polyamine compound preferably has a fluorine atom. In this case, the polyamide compound shows good compatibility with the fluorine-containing copolymer (A), thereby providing the crosslinked rubber article with lower compression set under high-temperature and high-compression conditions.

Specific examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP"; also known as bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic acid dihydrazide, and compounds represented by the formula (XII) of Japanese Patent No. 5833657. Among these, BOAP is preferred with a view to achieving the superior effects of the present invention.

The content of the crosslinking agent is preferably 0.3 to 10 parts by mass, more preferably 0.3 to 5 parts by mass, still more preferably 0.5 to 3 parts by mass, per 100 parts by mass of the fluorine-containing copolymer (A). When the content of the crosslinking agent falls within the above range, the superior effects of the present invention can be achieved.

### <Additional Component>

The fluorine-containing copolymer composition may contain additional components other than the above-described components, within the range that does not impair the effects of the present invention.

Specific examples of the additional components include: an acid acceptor (for example, a fatty acid ester, a fatty acid metal salt, or a divalent metal oxide (such as magnesium oxide, calcium oxide, zinc oxide, lead oxide etc.)); a filler and a reinforcing material (for example, carbon black, barium sulfate, calcium metasilicate, calcium carbonate, titanium dioxide, silicon dioxide, a fluorine-containing copolymer other than the fluorine-containing copolymers (A) and (B) (such as tetrafluoroethylene-fluoroalkyl vinyl ether copolymer, tetrafluoroethylene-hexafluoropropylene copolymer or ethylene-tetrafluoroethylene copolymer), polytetrafluoroethylene (PTFE), an aromatic polyester, polyamide-imide, thermoplastic polyimide, clay and talc); a scorch retarder (for example, a phenolic hydroxyl group-containing compound such as bisphenol A, a quinone such as hydroquinone, a α-methylstyrene dimer such as 2,4-di(3-isopropylphenyl)-4-methyl-1-pentene etc.); a crown ether (for example, 18-crown-6) and a release agent (for example, sodium stearate).

In the case where the fluorine-containing copolymer composition contains additional components, the total contents of the additional components is preferably 0.1 to 30 parts by mass, more preferably 1 to 15 parts by mass, still more preferably 3 to 5 parts by mass, per 100 parts by mass of the fluorine-containing copolymer (A).

As a method for producing the fluorine-containing copolymer composition, a method may be mentioned in which the above-described composition and the crosslinking agent are kneaded (a post-kneading step).

The kneading temperature in the post-kneading step is preferably lower than the glass transition temperature of the fluorine-containing copolymer (B). The glass transition temperature of the fluorine-containing copolymer (B) is as described above. The kneading temperature is also preferably lower than the glass transition temperature of the fluorine-containing copolymer (A).

More specifically, the kneading temperature is preferably 20 to 60°C, more preferably 22 to 55°C.

The kneading time is preferably 1 to 30 minutes, more preferably 5 to 15 minutes.

The rotational speed of the rotary member (e.g., blade or rotary shaft) is preferably 1 to 500 rpm, more preferably 5 to 50 rpm.

A preferred embodiment of the method for producing the fluorine-containing copolymer composition includes the following steps:
a pre-kneading step of kneading the fluorine-containing copolymer (A) and the fluorine-containing copolymer (B) at a temperature lower than the glass transition temperature of the fluorine-containing copolymer (B), thereby obtaining a mixture;
a kneading step of kneading the obtained mixture at a temperature higher than or equal to the glass transition temperature of the fluorine-containing copolymer (B), thereby obtaining a composition; and
a post-kneading step of forming the fluorine-containing copolymer composition by mixing the obtained composition with the crosslinking agent,
the fluorine-containing copolymer (A) in the mixture including units based on tetrafluoroethylene and units based on perfluoro(alkyl vinyl ether); and
the fluorine-containing copolymer (B) in the mixture being different from the fluorine-containing copolymer (A) and including units based on a monomer having at least one functional group selected from the group consisting of a carboxy group and a group represented by the formula (X), units based on tetrafluoroethylene and units based on perfluoro(alkyl vinyl ether).

The respective components and respective steps in the above production method are as described above.

After obtaining the fluorine-containing copolymer composition by mixing the above-described components, the fluorine-containing copolymer composition may be shaped as desired.

Specific examples of the method for shaping the fluorine-containing copolymer composition include compression molding, injection molding, extrusion molding, calender molding, and dissolving in a solvent followed by dipping or coating a substrate with the resulting solution.

### [Crosslinked Rubber Article]

The crosslinked rubber article of the present invention is a rubber article obtained by crosslinking the fluorine-containing copolymer (A) in the above-described fluorine-containing copolymer composition.

As a method for crosslinking the fluorine-containing copolymer (A) in the fluorine-containing copolymer composition, crosslinking by heating the fluorine-containing copolymer composition is preferable.

Specific examples of such crosslinking by heating include heat press crosslinking, steam crosslinking, crosslinking by injection molding, hot air crosslinking, molten salt crosslinking, crosslinking in a fluidized bed and Routh crosslinking.

The heating conditions are preferably 100 to 400°C for 1 second to 24 hours.

The crosslinked rubber obtained by heating (primary crosslinking) of the fluorine-containing copolymer composition may be further heated and thereby subjected to secondary crosslinking. By secondary crosslinking, the mechanical properties, compression set and other properties of the crosslinked rubber can be stabilized or improved.

The conditions for secondary crosslinking are preferably 80 to 350°C for 30 minutes to 48 hours.

The crosslinking may be performed by any method other than heating the fluorine-containing copolymer composition, such as applying radiation to the fluorine-containing copolymer composition. Specific examples of the radiation applied include an electron beam and an ultraviolet ray.

### <Properties>

The compression set of the crosslinked rubber article under high-temperature and high-compression conditions is preferably 70% or lower, and is more preferably 50% or lower from the viewpoint of good crosslinking of the fluorine-containing copolymer (A) and excellent shape recovery of the crosslinked rubber article after pressurization.

The compression set of the crosslinked rubber article under high-temperature and high-compression conditions is measured by the method described in the Examples below.

### <Applications>

The crosslinked rubber article is suitable as materials for O-rings, sheets, gaskets, oil seals, diaphragms, V-rings and the like. The crosslinked rubber article can also be used for various applications such as heat-resistant chemical-resistant sealing materials, heat-resistant oil-resistant sealing materials, wire sheath materials, sealing materials for semiconductor equipment, sealing materials for liquid crystal display panel manufacturing equipment, sealing materials for light emitting diode manufacturing equipment, corrosion-resistant rubber paints, sealing materials for urea-resistant grease etc., rubber paints, adhesive rubber, hoses, tubes, calendered sheets (rolls), sponges, rubber rolls, oil drilling members, heat dissipation sheets, solution-crosslinked materials, rubber sponges, bearing seals (urea resistant grease etc.), linings (resistant to chemical), insulating sheets for vehicles, insulating sheets for electronic equipment, rubber bands for watches, endoscope packings (resistant to amine), bellows hoses (produced from calendered sheets), packings/valves for water heaters, fenders (for marine civil engineering and ships), fibers and non-woven fabrics (protective clothing etc.), sealing materials for substrates, rubber gloves, stators of single-screw eccentric pumps, parts for urea SCR systems, vibration isolators, damping materials, sealants, additives to other materials, and toys.

### EXAMPLES

The present invention will be described in further detail with reference to Examples. Here, Ex. 1 to Ex. 3 correspond to Examples of the present invention; and Ex. 4 to Ex. 6 correspond to Comparative Examples. It should however be understood that the present invention is by no means restricted to these Examples.

### [Composition Analysis of Fluorine-containing Copolymers]

The contents (mol%) of the respective units in the fluorine-containing copolymer (A-1) described below were determined by ¹⁹F-nuclear magnetic resonance (NMR) analysis.

The contents (mol%) of the respective units in the fluorine-containing copolymers (B-1) and (B-2) described below were determined by melt NMR analysis and fluorine content analysis. However, the contents of NAH units were determined by the following infrared absorption spectrum analysis.

### [Infrared Absorption Spectrum Analysis]

The fluorine-containing copolymer (B-1) described below was press-formed into a film with a thickness of 200 µm. An infrared absorption spectrum of the film was measured, in which an absorption peak corresponding to NAH units in the fluorine-containing copolymer (B-1) appeared at 1778 cm⁻¹. The absorbance at the absorption peak was measured, and using the NAH molar absorptivity of 20810 mol⁻¹·l·cm⁻¹, the content of NAE units in the fluorine-containing copolymer (B-1) was determined from the measured absorbance.

### [Glass Transition Temperature of Fluorine-Containing Copolymer]

The glass transition temperature of each fluorine-containing copolymer was measured by the following measurement method.

First, a 10-mg measurement sample was weighed, cooled from room temperature (25°C) to -30°C at a rate of 10°C/min, and then, heated from -30°C to 350°C at a rate of 10°C/min (1st heating). A profile was obtained by plotting the heat flux (mW) on the vertical axis and the temperature (°C) on the horizontal axis. From the obtained profile, the temperature T corresponding to the minimum heat flux (mW) at which a baseline shift occurred during the heating (1st heating) was taken as the glass transition temperature of the fluorine-containing copolymer.

### <Measurement Conditions>

Equipment: DSC 7020, manufactured by Hitachi High-Tech Science Corporation
Temperature program mode: ramp mode
Cooling unit: electric cooling
Gas: air 50 mL/min
Pressure: 0.1 MPa
Pan: aluminum
Sample mass: 10 mg
Reference: empty pan

### [Melting Point of Fluorine-Containing Copolymer]

After heating the measurement sample to 350°C in the measurement of the glass transition temperature of the fluorine-containing copolymer, the measurement sample was subsequently cooled at a rate of 10°C/min. The temperature corresponding to the minimum heat flux (mW) at which an endothermic peak appeared was taken as the melting point (°C) of the fluorine-containing copolymer.

### [MFR of Fluorine-Containing Copolymer]

Using a melt indexer (manufactured by Techno Seven Corporation), the mass (g) of each fluorine-containing copolymer extruded from a 2-mm-diameter, 8-cm-long nozzle at 372°C under a load of 49 N over a period of 10 minutes (unit time) was measured.

### [Compression Set Under High-Temperature and High-Compression Conditions]

The compression set was measured in accordance with the method specified in ASTM D395 or JIS K6262. An O-ring (original thickness (wire diameter) = 3.5 mm) prepared in each Ex. was compressed to a compression rate of 25% using a compression device.

The compression device, with the compressed O-ring fixed therein, was held at 300°C for 70 hours in an electric furnace. After that, the compression device was taken out from the electric furnace, and the O-ring was immediately removed from the compression device and left in a thermostatic chamber of 23°C for 30 minutes. Then, the thickness of the O-ring (thickness after compression) was measured. This test was carried out using two O-ring samples, and the arithmetic mean of measured thickness values of the two O-ring samples was used. The compression set was calculated by the following formula. A compression set closer to 0% indicates better performance. 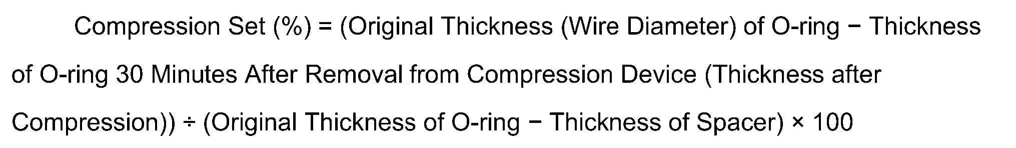 Compression Set (%) = (Original Thickness (Wire Diameter) of O-ring - Thickness of O-ring 30 Minutes After Removal from Compression Device (Thickness after Compression)) ÷ (Original Thickness of O-ring - Thickness of Spacer) × 100

### [Cracking Under High-Temperature and High-Compression Conditions]

The O-ring after the above-described compression set test under high-temperature and high-compression conditions was visually inspected for the occurrence of cracking.

### [Plasma Resistance]

The O-ring prepared in each Ex. was cut at three points along the thickness direction such that the circumference was divided into three equal parts, thereby obtaining measurement samples. Using a plasma etcher (CPE-200AHM, manufactured by SAKIGAKE Semiconductor Co., Ltd.), the measurement sample was treated under the conditions of a gas species of N₂/NF₃ (NF₃ mixing ratio: 20%), a power of 300 W, a pressure of 26 Pa and an irradiation time of 3 hours. The weight of the measurement sample before and after the treatment was measured to determine a weight loss ratio (mass%). The weight was measured to a precision of 0.1 mg by an Azpro electric balance (model: BCA64I-1SJP, manufactured by Sartorius).

### [Preparation of Fluorine-Containing Copolymer (A-1)]

A stainless steel pressure-resistant reactor equipped with an anchor stirrer and having an internal volume of 20 L was deaerated. Into this reactor, 7.2 L of ultrapure water, 880 g of a 30 mass% solution of C₂F₅OCF₂CF₂OCF₂COONH₄ as an emulsifier, 7.3 g of 8CNVE and 15.9 g of a 5 mass% aqueous solution of disodium hydrogenphosphate·dodecahydrate were charged, followed by replacing the gas phase with nitrogen. While stirring with the anchor stirrer at a rate of 375 rpm, 137 g of TFE and 635 g of PMVE were added into the reactor, and then, the temperature inside the reactor was increased to 80°C. The pressure inside the reactor was 0.90 MPa [gauge]. The polymerization was initiated with the addition of 28 mL of a 3 mass% aqueous solution of ammonium persulfate (APS). The molar ratio of the monomers added before the initiation of the polymerization (hereinafter also referred to as "initial monomers") was TFE: PMVE: 8CNVE = 26.3: 73.3: 0.4.

After the initiation of the polymerization, the monomers were added as follows with the progress of the polymerization. Hereinafter, the addition of the monomers after the initiation of the polymerization is also referred to as "subsequent addition"; and the monomers added after the initiation of the polymerization are also referred to as "subsequent monomers".

When the pressure inside the reactor decreased to 0.89 MPa [gauge], TFE was added to increase the pressure inside the reactor to 0.90 MPa [gauge]. This operation was repeated, and upon every addition of 119.3 g of TFE, 3.7 g of 8CNVE, 74 g of PMVE and 3.7 g of 8CNVE were added in this order.

When the polymerization rate began to decrease, a 3 mass% aqueous solution of APS was added as appropriate. The total amount of the 3 mass% aqueous APS solution added after the initiation of the polymerization was 35 mL.

After the cycle in which the total mass of TFE added reached 1073.7 g, 119.3 g of TFE was further added. When the total mass of TFE subsequently added reached 1193 g, the addition of the subsequent monomers was stopped. The inside of the reactor was cooled to 10°C to terminate the polymerization reaction. With this, a latex containing a fluorine-containing copolymer was obtained. The polymerization time was 375 minutes. The total mass of the subsequent monomers added was 1193 g of TFE, 666 g of PMVE and 66.6 g of 8CNVE, corresponding to a molar ratio of TFE: PMVE: 8CNVE = 74.0: 25.0: 1.0.

The latex was added into a 5 mass% aqueous solution of aluminum potassium sulfate to cause aggregation and precipitation of the fluorine-containing copolymer. The fluorine-containing copolymer was filtered out, washed with ultrapure water and vacuum-dried at 50°C, thereby obtaining a white fluorine-containing copolymer (A-1). The contents (molar ratio) of the respective units in the fluorine-containing copolymer (A-1) was TFE units: PMVE units: 8CNVE units = 70.9: 28.6: 0.5.

Further, the glass transition temperature of the fluorine-containing polymer (A-1) was -3°C.

### [Fluorine-Containing Copolymer (B-1)]

A "fluorine-containing copolymer (X1-1)" disclosed in Example of WO2016/017801 was ground using a jet mill, and used as a fluorine-containing copolymer (B-1). The molar ratio of the respective units in the fluorine-containing copolymer (B-1) was NAH units: TFE units: PPVE units = 0.1: 97.9: 2.0. The particle size D50 of the fluorine-containing copolymer (B-1) was 2 to 3 µm.

Further, the glass transition temperature of the fluorine-containing copolymer (B-1) was 80°C; the melting point of the fluorine-containing copolymer (B-1) was 310°C; and the MFR of the fluorine-containing copolymer (B-1) was 17.6 g/10 minutes (measurement temperature: 372°C).

### [Fluorine-Containing Copolymer (B-2)]

As a fluorine-containing copolymer (B-2), MJ-310 (manufactured by Chemours-Mitsui Fluoroproducts Co.,Ltd.) was used. The molar ratio of the respective units in the fluorine-containing copolymer (B-2) was TFE units: PPVE units = 98.7: 1.3.

The glass transition temperature of the fluorine-containing copolymer (B-2) was 90°C; the melting point of the fluorine-containing copolymer (B-2) was 310°C; and the MFR of the fluorine-containing copolymer (B-2) was 15 g/10 minutes (measurement temperature: 372°C).

### [Ex. 1]

The fluorine-containing copolymer (A-1) (100 parts by mass) and the fluorine-containing copolymer (B-1) (20 parts by mass) were kneaded (pre-kneading step) at 23°C for 10 minutes using a roll kneader (a φ8-inch × 18-inch test roll mill, manufactured by Yamatetsu Machinery Inc.), with the rotational speed of the F roll (on the operator's side among the two rolls of the roll kneader) set to 9 rpm and the rotational speed of the R roll (on the side opposite to the operator among the two rolls of the roll kneader) set to 13 rpm, thereby obtaining a sheet-shaped mixture 1 with a thickness of 1.5 mm. Immediately after the pre-kneading step, the surface temperature of the mixture 1 was measured with a radiation thermometer (IT-545S, manufactured by HORIBA, Ltd.) and found to be 50°C which is lower than or equal to the glass transition temperature of the fluorine-containing copolymer (B). Subsequently, the mixture 1 was cut into a size of 80 mm length × 10 mm width × 1.5 mm thickness such that the longitudinal direction was parallel to the roll rotation direction.

Here, the device used was Labo Plastomill (model: 4C150, manufactured by Toyo Seiki Seisaku-sho, Ltd.) with a mixer 30. The kneading temperature was set to 250°C, and the cut pieces of the mixture 1 were charged into the mixer (charge amount: 50 g). A composition 1 was prepared by kneading the mixture with the rotational speed set to 100 rpm and the processing time set to 2 minutes (kneading step).

To the composition 1, BOAP (2,2-bis(3-amino-4-hydroxyphenyl)hexafluoropropane, 1 part by mass) was added. The resulting composition was kneaded at 23°C for 10 minutes using the above-mentioned roll kneader (post-kneading step), thereby obtaining a fluorine-containing copolymer composition 1.

The resulting fluorine-containing copolymer composition 1 was hot-pressed (primary crosslinking) at 180°C for 10 minutes using a hydraulic press (model: SA-301, 50T type, manufactured by TESTER SANGYO CO., LTD., ram diameter: 180 mm) to form an O-ring (size: P-26). The obtained O-ring was subjected to secondary crosslinking under a nitrogen atmosphere in an oven (DN4111, manufactured by Yamato Scientific Co., Ltd.) by heating at 90°C for 2 hours, increasing the temperature to 200°C over 2 hours, heating at 200°C for 4 hours, further increasing the temperature to 305°C over 2 hours and heating at 305°C for 12 hours. The O-ring was then cooled to 23°C and used as an O-ring of Ex. 1.

### [Ex. 2 to Ex. 5]

In Ex. 2 to Ex. 5, compositions 2 to 5 and fluorine-containing copolymer compositions 2 to 5 were obtained by the same procedure as in Ex. 1 except that the fluorine-containing copolymer and kneading conditions were changed as shown in Table; and O-rings were respectively prepared using these fluorine-containing copolymer compositions.

In the processes of preparing the compositions 2 to 5, the surface temperature of each mixture immediately after the pre-kneading step was measured with a radiation thermometer (IT-545S, manufactured by HORIBA, Ltd.) and found to be 50°C which is lower than or equal to the glass transition temperature of the fluorine-containing copolymer (B).

### [Ex. 6]

The fluorine-containing copolymer (A-1) (100 parts by mass) and the fluorine-containing copolymer (B-1) (20 parts by mass) were kneaded at 23°C for 10 minutes using the above-mentioned roll kneader, thereby obtaining a mixture 6. Immediately after the kneading, the surface temperature of the mixture 6 was measured with a radiation thermometer (IT-545S, manufactured by HORIBA, Ltd.) and found to be 50°C.

Subsequently, BOAP (2,2-bis(3-amino-4-hydroxyphenyl)hexafluoropropane, 1 part by mass) was added to the mixture 6 without performing the kneading step. The resulting composition was subjected to the post-kneading step and formed into an O-ring of Ex. 6 in the same manner as in Ex. 1.

In Table 1, the symbol "-" in the "Compression Set Under High-Temperature and High-Compression Conditions" column for Ex. 4 to Ex. 6 indicates that measurement was not possible due to the occurrence of cracking in the O-ring after the compression set test under high-temperature and high-compression conditions.

**Table 1**

| | | | Ex. 1 | Ex. 2 | Ex. 3 | Ex. 4 | Ex. 5 | Ex. 6 |
|---|---|---|---|---|---|---|---|---|
| Fluorine-Containing Copolymer | (A-1) | parts by mass | 100 | 100 | 100 | 100 | 100 | 100 |
| | (B-1) | parts by mass | 20 | 20 | 45 | - | - | 20 |
| | (B-2) | parts by mass | - | - | - | 20 | 20 | - |
| Kneading Conditions in Kneading Step | Temperature | °C | 250 | 320 | 320 | 250 | 320 | 50 |
| | Rotational Speed | rpm | 100 | 100 | 100 | 100 | 100 | 9 |
| | Time | min | 2 | 2 | 2 | 2 | 2 | 10 |
| Cracking Under High-Temperature and High-Compression Conditions | | | not cracked | not cracked | not cracked | cracked | cracked | cracked |
| Compression Set Under High-Temperature and High-Compression Conditions | | % | 49 | 40 | 58 | - | - | - |
| Plasma Resistance (Weight Loss Rate) | | % | 6.58 | 6.24 | 6.26 | 6.95 | 6.65 | 7.01 |

It has been confirmed from the results shown in Table 1 that, by using the composition obtained by the present production method, it is possible to obtain a crosslinked rubber article that can suppress cracking under high-temperature and high-compression conditions and exhibits excellent plasma resistance.

It has also been confirmed from comparison of the results of Ex. 1 to Ex. 3 that, when the content of the fluorine-containing copolymer (B) in the mixture is 30 parts by mass or less per 100 parts by mass of the fluorine-containing copolymer (A), the crosslinked rubber article exhibits compression set characteristics under high-temperature and high-compression conditions.

The entire disclosure of Japanese Patent Application No. 2023-220825 filed on December 27, 2023, including the specification, claims and summary, is incorporated herein by reference in its entirety.

## Claims

1. A method for producing a composition, comprising a kneading step of kneading a mixture of a fluorine-containing copolymer (A) and a fluorine-containing copolymer (B) at a temperature higher than or equal to a glass transition temperature of the fluorine-containing copolymer (B),
the fluorine-containing copolymer (A) comprising units based on tetrafluoroethylene and units based on perfluoro(alkyl vinyl ether),
the fluorine-containing copolymer (B), which is a copolymer different from the fluorine-containing copolymer (A), comprising units based on a monomer having at least one functional group selected from the group consisting of a carboxy group and a group represented by the formula (X), units based on tetrafluoroethylene and units based on perfluoro(alkyl vinyl ether)
*-CO-O-CO-* (X)
where * represents a bonding position.

2. The method for producing a composition according to Claim 1, wherein the fluorine-containing copolymer (A) comprises units having nitrile groups.

3. The method for producing a composition according to Claim 1 or 2, wherein, in the kneading step, the mixture is kneaded at a temperature higher than or equal to a melting point of the fluorine-containing copolymer (B).

4. The method for producing a composition according to Claim 1 or 2, wherein the content of the fluorine-containing copolymer (B) in the mixture is 50 parts by mass or less per 100 parts by mass of the fluorine-containing copolymer (A).

5. The method for producing a composition according to Claim 1 or 2, wherein the fluorine-containing copolymer (A) is a perfluorinated copolymer.

6. A crosslinked rubber article obtained by crosslinking, with a crosslinking agent, the fluorine-containing copolymer (A) in the composition produced by the method according to Claim 1 or 2.

7. The crosslinked rubber article according to Claim 6, which is a sealing material for a semiconductor device.
